# EUROPÄISCHE PATENTSCHRIFT

(11) **EP 2 930 321 B1**
(45) Veröffentlichungstag und Bekanntmachung des Hinweises auf die Patenterteilung: **30.11.2016**
(21) Anmeldenummer: 14004348.0
(22) Anmeldetag: 20.12.2014
(51) Int. Cl.: F01K 23/06

(54) **Antriebsvorrichtung eines Kraftfahrzeugs mit einem Gasturbinensystem zur Energierückgewinnung und Verfahren zum Betrieb der Antriebsvorrichtung**
Drive device of a motor vehicle with a gas turbine system for energy recovery and method for operating the drive device
Dispositif d'entraînement d'un véhicule automobile ayant un système de turbine à gaz destiné à la récupération d'énergie et procédé de fonctionnement d'un dispositif d'entraînement

(30) Priorität: 24.03.2014 DE 102014004255
(43) Veröffentlichungstag der Anmeldung: 14.10.2015
(73) Patentinhaber: MAN Truck & Bus AG, 80995 München (DE)
(72) Erfinder: Schydlo, Alexander, 81243 München (DE)
(74) Vertreter: v. Bezold & Partner Patentanwälte - PartG mbB

(56) Entgegenhaltungen:
- EP-A1- 2 623 761
- WO-A1-2013/108867
- DE-A1-102009 007 555
- DE-A1-102010 033 659

## Beschreibung

Die Erfindung betrifft eine Antriebsvorrichtung eines Kraftfahrzeugs, insbesondere eines Nutzfahrzeugs, mit einer Brennkraftmaschine und einer Vorrichtung zur Energierückgewinnung aus einem Abwärmestrom der Brennkraftmaschine. Die Erfindung betrifft ferner ein Verfahren zum Betrieb der Antriebsvorrichtung.

Brennkraftmaschinen wandeln nur einen Teil der chemischen Energie des Brennstoffes in mechanische Energie um. Ein großer Teil der Energie geht in Form hoher Abwärmeströme verloren, die in den meisten Fällen aus thermodynamischer Sicht ungenutzt an die Umgebung als Abfallwärme in Form der Abgasenthalpie oder in Form von Niedertemperaturabwärmeströmen abgegeben werden. Dies ist insbesondere bei Brennkraftmaschinen für Nutzfahrzeuge der Fall, die aus Wirkungsgradgründen häufig als Dieselmotoren konzipiert sind und hohe Abwärmeströme erzeugen.

Aus der Praxis ist es zwar bekannt, den Enthalpiestrom des Abgases zum Antrieb einer Turbine eines Abgasturboladers zu nutzen, um die dem Verbrennungsmotor zugeführte Luft zu verdichten, die Abgaswärme wird hierbei jedoch nicht als Energiequelle genutzt. Darüber hinaus belasten heutige Motorkühlungskonzepte sehr stark den Kühlmittelkreislauf, was zu einer Erhöhung des Kraftstoffverbrauchs des Triebstrangs führt.

Aus der Offenlegungsschrift DE 10 2010 033 659 A1 ist ein Verfahren einer Vorrichtung zur Energierückgewinnung aus einem Abgasstrom eines Verbrennungsmotors bekannt, wobei der Abgasstrom primärseitig einem ersten Abgaswärmetauscher zugeführt wird, dem sekundärseitig ein Arbeitsmedium zugeführt wird, das in einem dem ersten Abgaswärmetauscher vorgeschalteten Verdichter verdichtet und in einer dem ersten Abgaswärmetauscher nachgeschalteten Turbine entspannt wird. Das Arbeitsmedium wird hierbei in einem geschlossenen Joule-Kreisprozess geführt, dem ein Clausius-Rankine-Kreisprozess nachgeschaltet ist.

Der Erfindung liegt deshalb die Aufgabe zugrunde, eine Antriebsvorrichtung für ein Kraftfahrzeug mit einer Brennkraftmaschine bereitzustellen, die einen verbesserten Wirkungsgrad gegenüber herkömmlichen Antriebsvorrichtungen aufweist. Der Wirkungsgrad soll insbesondere durch eine verbesserte Ausnutzung der von der Brennkraftmaschine erzeugten Abwärme angehoben sein. Es ist eine weitere Aufgabe der Erfindung, eine thermische Entlastung des Kühlsystems der Antriebsvorrichtung zu ermöglichen. Es ist ferner eine Aufgabe der Erfindung, ein Verfahren zum Betrieb einer Antriebsvorrichtung bereitzustellen, mit dem Nachteile herkömmlicher Betriebsverfahren vermieden werden können.

Diese Aufgaben werden durch eine Antriebsvorrichtung gemäß des Hauptanspruchs und durch ein Betriebsverfahren gemäß der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Antriebsvorrichtung eines Kraftfahrzeugs, insbesondere eines Nutzfahrzeugs, mit einer Brennkraftmaschine vorgeschlagen, die ein Gasturbinensystem zur Energierückgewinnung aufweist, umfassend einen Verdichter, mindestens einen Wärmeübertrager und eine Gasturbine. Die Kraftmaschine mit interner Verbrennung ist vorzugsweise ein Dieselmotor, kann aber auch als Benzin-/Gasmotor ausgeführt sein.

Das Gasturbinensystem wird zur Energierückgewinnung aus wenigstens einem Abwärmestrom gemäß einem offenen oder geschlossenen realen rechtslaufenden Brayton-Kreisprozess (auch als Joule-Kreisprozess bezeichnet) betrieben. Hierbei ist das Gasturbinensystem eingerichtet, ein Arbeitsfluid des Gasturbinensystems im Verdichter zu verdichten, anschließend dem verdichteten Arbeitsfluid mittels des mindestens einen Wärmeübertragers Wärme mindestens eines Abwärmestroms der Brennkraftmaschine zuzuführen und das erwärmte Arbeitsfluid anschließend der Gasturbine zuzuführen. Die Gasturbine wird durch das in dem mindestens einen Wärmetauscher aufgeheizte und erwärmte Arbeitsfluid angetrieben. Mittels des integrierten Gasturbinensystems kann somit aus der durch den Betrieb der Brennkraftmaschine entstehenden Abwärme mechanische Energie rückgewonnen werden.

Die Integration des vorgenannten Gasturbinensystems in eine Antriebsvorrichtung eines Fahrzeugs hat somit den Vorteil, dass die von der Brennkraftmaschine erzeugte Abwärme als die Wärmequelle des Gasturbinenkreisprozess genutzt wird, um mittels des Gasturbinensystems mechanische Energie zu erzeugen.

Während ein idealer rechtslaufender Brayton-Kreisprozess aus zwei isentropen und zwei isobaren Zustandsänderungen besteht, treten bei einem realen Gasturbinen-Kreisprozess Druckverluste auf, so dass die einzelnen Schritte nicht reversibel sind und somit in der Praxis keine vollkommen isobaren Zustandsänderungen erreicht werden können.

Unter einem Wärmeübertrager (auch umgangssprachlich häufig als "Wärmetauscher" bezeichnet) wird eine Vorrichtung verstanden, die einen Wärmestrom von einem heißen Fluid auf ein kälteres überträgt. Der Wärmeübertrager ist also mindestens mit zwei Fluidströmen fluidverbunden: einem ersten Fluidstrom, der von einem Abwärmestrom der Brennkraftmaschine gebildet wird, und einem zweiten Fluidstrom, der von dem Arbeitsfluid des Gasturbinensystems gebildet wird, wobei der Abwärmestrom der Brennkraftmaschine dem Arbeitsfluid Wärme zuführt.

Gemäß unterschiedlichen Ausführungsvarianten der Erfindung, die nachfolgend beschrieben werden, kann das Gasturbinensystem mehrere Wärmeübertrager umfassen, die an unterschiedlichen Stellen der Antriebsvorrichtung angeordnet sein können und mit unterschiedlichen Abwärmeströmen der Antriebsvorrichtung fluidverbunden sein können.

Der mindestens eine Wärmeübertrager umfasst einen ersten Wärmeübertrager, der mit einem Abwärmestrom der Motorkühlung fluidverbunden ist. Ein Abwärmestrom der Motorkühlung ist beispielsweise ein Fluidstrom der Motorkühlung, der durch einen Motorblock, einen Zylinderkopf und/oder im Kurbelgehäuse erwärmt wurde, typischerweise auf max. 100°C - 120°C. Dies hat den Vorteil, dass auch die Abwärme derartiger Niedertemperaturquellen zur Erhöhung des Wirkungsgrades der Antriebsvorrichtung genutzt werden kann. Ein weiterer Vorteil ist, dass durch die Nutzung der Abwärme der Motorkühlung der Kühlmittelkreislauf thermisch entlastet wird.

Bei einer vorteilhaften Variante dieser Ausgestaltungsform ist der erste Wärmeübertrager im Abwärmestrom der Motorkühlung stromauf eines Kühlers der Abgasrückführung angeordnet. Der Abwärmestrom der Motorkühlung kann aus erwärmter Luft, aus erwärmtem Kühlwasser oder einem anderen Fluid bestehen.

Der mindestens eine Wärmeübertrager umfasst einen zweiten Wärmeübertrager, der mit einem Abwärmestrom einer Abgasrückführung fluidverbunden ist. Der zweite Wärmeübertrager ist somit eingerichtet, Abgas im Abgasrückführungstrakt zur Erwärmung des Arbeitsfluids des Gasturbinensystems zu nutzen. Im Unterschied zum ersten Wärmeübertrager, der z. B. erwärmtes Kühlwasser oder erwärmte Kühlungsluft der Motorkühlung zur Wärmeübertragung nutzt, nutzt der zweite Wärmeübertrager die im Vergleich hierzu deutlich wärmeren Abgase, die durch den Abgasrückführungstrakt geleitet werden, zur Erwärmung des Arbeitsfluids des Gasturbinenkreislaufs.

Vorzugsweise ist der zweite Wärmeübertrager im Arbeitsfluidkreis des Gasturbinensystems stromauf zu dem ersten Wärmeübertrager angeordnet. Dem Arbeitsfluid des Gasturbinensystems wird gemäß dieser Ausführungsvariante somit zuerst im zweiten Wärmeübertrager Wärme zugeführt und anschließend im ersten Wärmeübertrager. Ein besonderer Vorzug einer kombinierten Anordnung des ersten Wärmeübertragers und des zweiten Wärmeübertragers liegt somit darin, dass die Ausnutzung von sowohl Niedertemperaturquellen (z. B. Abwärmestrom der Motorkühlung) als auch Hochtemperaturquellen (z. B. Abwärmestrom der Abgasrückführung) eine höhere Energierückgewinnung aus der erzeugten Abwärme ermöglicht. Ferner wird die Energierückgewinnung unabhängiger von dem Betrieb der Motorschutzfunktion, da z. B. die zur Verfügung stehende Abwärme aus der Motorkühlung im laufenden Betrieb Schwankungen unterworfen ist.

Im Rahmen der Erfindung besteht die Möglichkeit, dass der zweite Wärmeübertrager als Dreistrom-Wärmeübertrager ausgebildet ist, der zusätzlich zu einem Abwärmestrom der Abgasrückführung noch mit einem Abwärmestrom der Motorkühlung fluidverbunden ist. Vorteilhafterweise ist somit der zweite Wärmeübertrager in den Kühler der Abgasrückführung integriert, so dass eine besonders kompakte Anordnung der Komponenten erzielt wird.

Im Rahmen der Erfindung besteht jedoch auch die Möglichkeit, dass der zweite Wärmeübertrager als Zweistrom-Wärmeübertrager ausgebildet ist, so dass dieser im Abgasrückführungstrakt stromauf oder stromab zu dem Kühler der Abgasrückführung angeordnet sein kann.

Der mindestens eine Wärmeübertrager umfasst einen dritten Wärmeübertrager, der mit einem Abwärmestrom einer Abgasnachbehandlung fluidverbunden ist. Gemäß diesem Ausführungsbeispiel wird somit im dritten Wärmeübertrager Abgas im Abgasnachbehandlungstrakt zur Erwärmung des Arbeitsfluids des Gasturbinensystems genutzt. Bei Vorsehen mindestens sowohl des zweiten als auch dritten Wärmeübertragers ermöglicht die Erfindung, sowohl im Abgasrückführungstrakt als auch im Abgasnachbehandlungstrakt die Hochtemperaturwärmequellen (Wärmeenergie des Abgases) zur Erwärmung des Arbeitsfluids des Gasturbinenkreislaufs zu nutzen, so dass die im Abgas vorhandene Wärme optimal ausgenutzt wird.

Besonders vorteilhaft ist, wenn der dritte Wärmeübertrager in eine Abgasnachbehandlungseinrichtung integriert ist, so dass der Wärmeübertrager und die Abgasnachbehandlung baulich kompakt in einer Komponente integriert sind.

Der mindestens eine Wärmeübertrager umfasst einen vierten Wärmeübertrager, der mit einem Abwärmestrom einer Kühlung des Ladeluftstrangs bzw. einem Niedertemperaturkreislauf der Motorkühlung fluidverbunden ist.

Bei Vorsehen mindestens sowohl des ersten als auch des vierten Wärmeübertragers ermöglicht die Erfindung eine optimale Ausnutzung der vorhandenen Niedertemperaturquellen, vorliegend z. B. der erwärmten Kühlmittelströme der Motorkühlung und der Ladeluftkühlung.

Bei einer vorteilhaften Variante der Ausführungsformen mit dem vierten Wärmeübertrager kann die Antriebsvorrichtung einen ersten Abgasturbolader und einen zweiten Abgasturbolader umfassen, mittels derer aus einer Umgebung angesaugte Ladeluft in einer ersten und einer zweiten Stufe verdichtet werden; einen Hochdruck-Wärmeübertrager und einen Niederdruck-Wärmeübertrager, mittels derer Ladeluft nach der ersten und der zweiten Verdichtung abgekühlt werden, wobei der vierte Wärmeübertrager im Strömungsweg der Ladeluftkühlung stromab des Hochdruck-Wärmeübertragers und des Niederdruck-Wärmeübertragers angeordnet ist.

Wird das Kühlmittel der Motorkühlung auch zur Kühlung des Ladeluftstrangs genutzt, kann der vierte Wärmeübertrager mit einem Kühlkreislauf der Motorkühlung fluidverbunden sein.

Wie vorstehend beschrieben, besteht im Rahmen der Erfindung die Möglichkeit, dass das Gasturbinensystem mit einer Kombination von mehreren der vorgenannten Wärmeübertragern.

Gemäß der Erfindung umfasst die Antriebsvorrichtung den ersten Wärmeübertrager, den zweiten Wärmeübertrager, den dritten Wärmeübertrager und den vierten Wärmeübertrager. Eine weitere Variante der Erfindung ist gekennzeichnet durch eine Anordnung der vier Wärmeübertrager derart, dass in Strömungsrichtung des Arbeitsfluids des Gasturbinensystems der zweite Wärmeübertrager stromauf zu dem ersten, der erste stromauf zu dem dritten und der dritte stromauf zu dem vierten Wärmeübertrager angeordnet ist.

Ein besonderer Vorzug der Erfindung liegt somit darin, dass durch das Vorsehen mehrerer Wärmeübertrager mehrere Abwärmequellen der Antriebsvorrichtung ausgenutzt werden können. Ferner ist zu erwähnen, dass verschiedene Betriebspunkte des Motors unterschiedliche thermische Belastungen erzeugen und damit zu unterschiedlichen bzw. schwankenden Abwärmeströmen führen können. Erhöht sich beispielsweise der Abwärmestrom der Abgasrückführung, kann sich der Abwärmestrom der Abgasnachbehandlung reduzieren. Werden jedoch vorzugsweise mehrere Wärmeübertrager, wie vorstehend beschrieben, angeordnet, kann die verwertbare Abwärme zur Erwärmung des Arbeitsfluids erhöht werden. Zugleich werden Schwankungen der auf das Arbeitsfluid des Gasturbinenkreislaufs übertragenen Wärmeströme reduziert.

Vorzugsweise umfasst der Strömungsweg des Arbeitsfluids eine steuerbare Bypassleitung zur Umgehung des mindestens einen Wärmeübertragers. Besonders vorteilhaft ist, wenn für jeden der verwendeten Wärmeübertrager eine separate Bypassleitung zur Umgehung des jeweiligen Wärmeübertragers vorgesehen ist, die in Abhängigkeit der Betriebsbedingungen schaltbar ist.

Ein weiterer Aspekt der Erfindung betrifft ein Fahrzeug, insbesondere ein Nutzfahrzeug, mit einer Antriebseinheit nach einem der vorgehenden Aspekte.

Ferner betrifft die Erfindung ein Verfahren zum Betrieb einer Antriebseinheit gemäß einer der vorgehenden Aspekte, aufweisend die Schritte: Verdichten des Arbeitsfluids des Gasturbinensystems in dem Verdichter; Erwärmen des Arbeitsfluids des Gasturbinensystems in dem mindestens einen Wärmeübertrager; Zuführen des erwärmten Arbeitsfluids zu der Gasturbine; und Erzeugung von mechanischer Energie durch Expansion des Arbeitsfluids in der Gasturbine.

Im Rahmen der Erfindung besteht ferner die Möglichkeit, dass die Gasturbine mechanisch mit dem Verdichter zum Antrieb des Verdichters gekoppelt ist. Ferner kann die Gasturbine mechanisch mit einer elektrischen Maschine, zum Beispiel einem Nebenaggregat oder Generator, gekoppelt sein. Weiter vorzugsweise kann die Gasturbine sowohl mit einer elektrischen Maschine als auch mit dem Verdichter mechanisch gekoppelt sein. Beispielsweise kann der Verdichter mechanisch mit einer Abtriebswelle gekoppelt sein, derart, dass die Abtriebswelle den Verdichter antreibt.

Das Gasturbinensystem kann unter Verwendung von Umgebungsluft als offener Kreisprozess betrieben werden. Alternativ kann der Gasturbinenprozess unter Verwendung eines thermodynamisch optimierten Fluids auch als geschlossener Kreisprozess ausgeführt sein.

Weiterhin besteht die Möglichkeit, dass der oder die Wärmeübertrager als direkte Wärmeübertrager, d. h. ohne Phasenumwandlung, oder als indirekter Wärmeübertrager, d. h. mit Phasenumwandlung, zum Beispiel als Wärmeröhre, ausgeführt sind.

Zusammengefasst wird also eine Antriebsvorrichtung vorgeschlagen, aufweisend ein Gasturbinensystem, das in Anlehnung an einen rechtsläufigen realen Brayton-Joule-Gasturbinen-Kreisprozess eingerichtet ist, ein Arbeitsfluid mittels eines Verdichters zu verdichten, anschließend das Arbeitsfluid unter Ausnutzung der von der Brennkraftmaschine erzeugten Abwärme in einem Wärmeübertrager zu erwärmen und anschließend das verdichtete und erwärmte Arbeitsfluid der Gasturbine zuzuführen, in der sich das Arbeitsfluid entspannt und die Entspannungsarbeit zum Antrieb der Turbine genutzt wird. Die mechanische Energie der Turbine kann anschließend weiterverwendet werden, z. B. zum Antrieb eines Generators. Dadurch kann die bei der Verbrennung erzeugte Abwärme teilweise rückgewonnen werden, wodurch der Wirkungsgrad der Antriebsvorrichtung steigt und zugleich die Kühlsysteme entlastet werden.

Weitere Einzelheiten und Vorteile der Erfindung werden im Folgenden unter Bezug auf die beigefügte Zeichnung beschrieben.

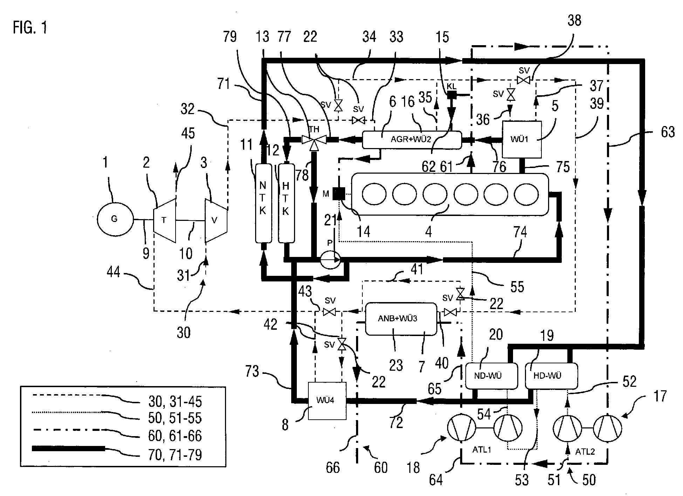

Figur 1 zeigt einen schematischen Aufbau der Antriebsvorrichtung gemäß einem bevorzugten Ausführungsbeispiel.

Die Erfindung ist hinsichtlich des konstruktiven Aufbaus der Antriebsvorrichtung nicht auf einen bestimmten Aufbau beschränkt. Allerdings kann die Antriebsvorrichtung verschiedene Komponenten umfassen, die nachfolgend kurz beschrieben werden. Die Brennkraftmaschine ist im vorliegenden Ausführungsbeispiel als sechszylindrischer Großdieselmotor 4 eines Nutzfahrzeugs mit einer Kraftstoff-Luft-Zuführung sowie einem Ladeluft- und Abgassystem ausgeführt. Das Abgassystem umfasst ferner eine Abgasrückführung (AGR) und eine Abgasnachbehandlung (ANB).

Nachfolgend werden zunächst die Motor- und Ladeluftkühlung, die Ladeluftzuführung sowie das Abgassystem der Antriebsvorrichtung, die, mit Ausnahme der integrierten Wärmeübertrager, in herkömmlicher Weise ausgeführt sind, kurz beschrieben.

Figur 1 zeigt ein beispielhaft ausgeführtes Kraftfahrzeugkühlsystem 70, wie es beispielsweise in modernen Nutzfahrzeugen, insbesondere in Lastkraftwagen und Omnibussen, zum Einsatz kommt. Die dicke durchgezogene Linie 70 zeigt hierbei den Strömungsweg des Kühlmittels bzw. die Kühlmittelleitungen, wobei einzelne Strömungsabschnitte mit den Bezugszeichen 71 - 79 hervorgehoben sind. Das Kühlsystem weist einen ersten als Hochtemperaturkreislauf ausgelegten Kühlkreislauf auf und einen zweiten als Niedertemperaturkreislauf ausgelegten Kühlkreislauf, der mit dem ersten Kühlkreislauf fluidisch verbunden ist. Der Hochtemperaturkreislauf umfasst im Wesentlichen die Abschnitte 74 - 79, während der Niedertemperaturkreislauf die Abschnitte 71 - 73 umfasst.

Über die beiden Strömungswege wird über die Kühlmittelförderpumpe 21 ein Kühlmittel umgewälzt. Bei dem Kühlmittel kann es sich um Wasser handeln oder beispielsweise auch um ein Gemisch aus Wasser und einem Glykol, wobei das Glykol die Verdampfungstemperatur des Gemisches gegenüber reinem Wasser anhebt.

Die Kühlmittelförderpumpe 21 fördert, sobald sie eingeschaltet wird, in Abhängigkeit der Motordrehzahl ein Kühlmittelstrom durch den Kühlmittelkreislauf. Das Kühlmittel im Hochtemperaturkreislauf durchströmt den motorseitigen Hochtemperaturkühler 12, während das Kühlmittel im Niedertemperaturkreislauf einen Niedertemperaturkühler 11 durchströmt.

Ferner ist ein Hauptwasserthermostat 13 vorgesehen, der die Temperatur des Kühlmittels überwacht. Der Hauptwasserthermostat 13 ist ferner eingerichtet, das Kühlmittel durch den Abschnitt 78 statt durch den Abschnitt 79 und den Hochtemperaturkühler 12 zu leiten, wenn eine vorbestimmte Mindesttemperatur des Kühlmittels noch nicht erreicht ist, beispielsweise zu Beginn des Fahrbetriebs.

In dem Hochtemperaturkühlkreislauf sind eine Brennkraftmaschine 4, ein erster Wärmetauscher 5, ein zweiter Wärmetauscher 6 (Wärmetauscher der Abgasrückführung), eine Kühlmittelpumpe 21 und ein luftgekühlter Hochtemperaturkühler 12 hydraulisch und thermisch eingebunden.

Im Hochtemperaturkreislauf wird das Kühlmittel über den Abschnitt 74 in den Motorblock bzw. die Zylinderköpfe oder das Kuppelgehäuse der Brennkraftmaschine 4 geleitet, um dort die durch den Verbrennungsprozess erwärmten Komponenten zu umströmen. Die erwärmten Komponenten im Motorblock geben Wärme an das Kühlmittel ab und werden dadurch gekühlt.

Das so erwärmte Kühlmittel tritt aus dem Motorblock bzw. dem Kurbelgehäuse aus und ist über den Leitungsabschnitt 75 fluidisch eingangsseitig mit dem ersten Wärmeübertrager 5 verbunden, dessen Funktion nachfolgend noch detaillierter beschrieben wird.

Das aus dem ersten Wärmeübertrager 5 austretende Kühlmittel ist über die Kühlmittelleitung 76 fluidisch mit einem Kühler 16 der Abgasrückführung verbunden, in dem zusätzlich der zweite Wärmeübertrager 6 integriert ist.

Über den Leitungsabschnitt 77 wird das Kühlmittel anschließend zum Hauptthermostat 13 zurückgeführt und je nach Stellung des Hauptthermostats 13 durch den Leitungsabschnitt 79 in die Bypassleitung 78 oder in den Hochtemperaturkühler 12 geleitet.

Über ein Kühlmittelverteiler/-regelventil (nicht dargestellt) nach der Umwälzpumpe 21 kann das Kühlmittel in den Niedertemperaturkreislauf strömen und in den Niedertemperaturkühler 11 geleitet werden, wo das Kühlmittel mittels Umgebungsluft gekühlt wird.

Der Leitungsabschnitt 71 verbindet das aus dem Niedertemperaturkühler 11 austretende Kühlmittel über die Leitung 71 fluidisch mit einem Ladeluftkühler, der vorliegend beispielhaft einen Hochdruck-Wärmeübertrager 19 und einen nachgeordneten Niederdruck-Wärmeübertrager 20 umfasst. Der im Niedertemperaturkühler abgekühlte Kühlmittelteilmassenstrom der Motorkühlung wird somit auch zur Kühlung der mittels der Abgasturbolader komprimierten Ladeluft verwendet. Die beim Komprimieren der Ladeluft erzeugte Wärme erwärmt das Kühlmittel in dem Hochdruck-Wärmeübertrager 19 und dem Niederdruck-Wärmeübertrager 20 des Ladeluftstrangs und erzeugt dadurch einen Abwärmestrom der Ladeluftkühlung, der über den Leitungsabschnitt 72 in den vierten Wärmeübertrager 8 geleitet wird.

Nach Verlassen des vierten Wärmeübertragers 8 strömt das Kühlmittel über den Leitungsabschnitt 73 zurück in den Leitungsabschnitt, der sich ausgangsseitig an den Hochtemperaturkühler 12 anschließt.

Der Ladeluftstrang 50 ist in Figur 1 durch die gepunktete Linie dargestellt. Bei der in Figur 1 dargestellten Antriebseinheit wird aus der Umgebung die für die Verbrennung in der Brennkraftmaschine 4 benötigte Ladeluft angesaugt, was durch die Leitungen 50 für die Ladeluftzufuhr mit den Teilabschnitten 51 - 55 dargestellt ist.

Hierbei wird Umgebungsluft im Abschnitt 51 angesaugt und anschließend in zwei Stufen mit einem ersten Abgasturbolader 17 und einem zweiten Abgasturbolader 18 verdichtet. Jeder Abgasturbolader weist dabei eine Abgasturbine auf, die in einem mit einem Abgasausgang des Verbrennungsmotors 4 in Fluidverbindung zu bringenden Abgasstrang 63 angeordnet ist, und einem mit der Abgasturbine in Drehantriebsverbindung stehenden Verdichter, der in einem mit einem Lufteingang des Verbrennungsmotors 4 in Fluidverbindung zu bringenden Ladeluftstrang 51 bzw. 53 angeordnet ist. Die Verdichtung der Ladeluft in zwei Stufen ermöglicht das Abkühlen der Ladeluft sowohl in dem vorgenannten Hochdruck-Wärmeübertrager 19 nach dem Austritt aus dem ersten Abgasturbolader 17 sowie anschließend in dem zweiten Niederdruck-Wärmeübertrager 20 nach dem Austritt des Abgases aus dem zweiten Abgasturbolader 18.

Nachdem die Ladeluft den Ladeluftkühler 20 verlassen hat, wird sie über die Leitung 55 der Mischkammer 14 zugeführt, in der ein Teil des Abgases, das die Brennkraftmaschine 4 bereits verlassen hat und über die Abgasrückführung 62 der Mischkammer 14 zugeführt wird, beigemischt wird. Dieses Abgas-Ladeluftgemisch wird dann dem Verbrennungsraum der Brennkraftmaschine 4 zugeführt.

Der Abgasstrang der Brennkraftmaschine ist mit der strichgepunkteten Linie 60 dargestellt. Es wurde vorstehend bereits erwähnt, dass die Antriebsvorrichtung eine Abgasrückführung umfasst. Über eine steuerbare Klappe 15 der Abgasrückführung wird ein Teil des Abgases, das die Brennkraftmaschine bereits verlassen hat, einem Abgaskühler 16 zugeführt und dort abgekühlt. Das Abgas wird anschließend der zuvor beschriebenen Mischkammer 14 zugeführt, wo das rückgeführte Abgas der Ladeluft beigemischt wird. Der Teil des Abgases, der nicht in die Abgasrückführung abgezweigt wird, wird über die Abgasleitung 63 der Turbine des ersten Abgasturboladers 17 und anschließend über die Leitung 64 der Turbine des zweiten Abgasturboladers 18 zugeführt.

Nach Verlassen des zweiten Turboladers 18 wird das Abgas über die Leitung 65 der Abgasnachbehandlung 7 zugeführt und anschließend über die Abgasleitung 66 an die Umgebung abgegeben.

Die vorstehend beschriebene Antriebsvorrichtung erzeugt verschiedene Abwärmeströme, beispielsweise in Form des erwärmten Arbeitsmittels der Motorkühlung 70 oder der heißen Abgase in der Abgasrückführung oder der Abgasnachbehandlung.

Um einen Teil dieser Abfallenergie rückzugewinnen, umfasst die Antriebsvorrichtung ferner ein Gasturbinensystem, das gemäß einem offenen, rechtsläufigen realen Brayton-Kreisprozess betrieben ist.

Der offene Kreislauf 30 des Arbeitsmittels des Gasturbinensystems ist mit der gestrichelten Linie dargestellt, wobei einzelne Abschnitte des Kreislaufs mit den Bezugszeichen 31 bis 45 hervorgehoben sind.

Über eine Frischluftzuführung 31 wird dem Verdichter 3 Umgebungsluft zugeführt und dort verdichtet. Über die Leitung 32 wird die verdichtete Luft anschließend dem Wärmetauscher 6 zugeführt. In diesem Wärmetauscher 6 wird die verdichtete Frischluft durch die heißen Abgase des Verbrennungsmotors, die typischerweise 700°C - 800°C heiß sind, erwärmt und beschleunigt. Hierdurch steigt der Energieerhalt des Gasturbinenarbeitsmediums.

Der Wärmeübertrager 6 nutzt den zuvor beschriebenen Abwärmestrom aus der Abgasrückgewinnung (AGR) 16 und ist als Dreistrom-Wärmeübertrager ausgebildet. Der Dreistrom-Wärmeübertrager 6 ist somit mit dem verdichteten Arbeitsmedium des Gasturbinensystems fluidisch verbunden, mit dem heißen Abgasstrom der Abgasrückführung und mit dem erwärmten Kühlmittelstrom der Motorkühlung.

In Figur 1 ist dargestellt, dass der Dreistrom-Wärmeübertrager somit sowohl als Kühler 16 der Abgasrückführung als auch als Wärmeübertrager 6 des Gasturbinenprozesses fungiert. Der Wärmeübertrager 6 ist ferner mit einer Bypassleitung 34 und zugeordneten schaltbaren Strömungsventilen 16 versehen, so dass je nach Betriebspunkt der Brennkraftmaschine bei Bedarf die verdichtete Luft entweder durch den Leitungsabschnitt 33 im Wärmeübertrager 6 einströmen und über die Leitung 35 in erwärmter Form ausströmen kann oder über die Bypassleitung 34 an dem Wärmeübertrager 2 vorbeiströmen kann.

Das Arbeitsfluid des Gasturbinenprozesses wird anschließend entweder über die Leitung 36 in den Wärmeübertrager 5 eingeleitet und kann diesen über die Austrittsleitung 37 wieder verlassen. Ferner kann das Arbeitsmedium des Gasturbinenkreislaufs bei entsprechender Schaltung der Strömungsventile (SV) den ersten Wärmeübertrager 5 über eine Bypassleitung 38 umgehen.

Der Wärmeübertrager 5 ist ferner mit dem Abwärmestrom der Motorkühlung über die Leitungen 75 und 76 fluidisch gekoppelt, so dass das Arbeitsfluid des Gasturbinenprozesses im Wärmeübertrager 5 durch das im Motorblock erwärmte Kühlmittel der Motorkühlung erwärmt wird. Typische maximal zulässige Temperaturen des Kühlmittels sind 100°C - 120°C.

Anschließend wird das Arbeitsfluid über die Leitung 39 dem Wärmeübertrager 7 zugeführt.

Der Abgaswärmeübertrager 7 ist zusätzlich mit dem stromab zu den Turboladern 17, 18 verlaufenden Abschnitt 65 des Abgasstrangs 60 fluidisch gekoppelt und kann, wie im vorliegenden Ausführungsbeispiel gezeigt, in das Abgasnachbehandlungssystem 23 integriert werden. Das Arbeitsfluid wird somit im Wärmeübertrager 3 durch die Wärme des Abgases, das sich in der Abgasnachbehandlung befindet, erwärmt.

Im Rahmen des vorliegenden Ausführungsbeispiels ist wiederum eine Bypassleitung 41 mit entsprechenden Steuerungsventilen 16 (SV) vorgesehen, um bei Bedarf das Arbeitsfluid des Gasturbinensystems um den Wärmeübertrager 3 herum zu führen.

Über die Leitungen 42 kann das Arbeitsfluid dann noch einem vierten Wärmeübertrager 8 zugeführt werden, der mit einem Abwärmestrom aus dem Niedertemperaturkreislauf 72, wie zuvor beschrieben, fluidisch gekoppelt ist.

Mit anderen Worten wird das Arbeitsfluid des Gasturbinenprozesses im vierten Wärmeübertrager nicht durch erwärmtes Abgas sondern durch das erwärmte Kühlmittel für die Kühlung des Abgases im Ladeluftstrang erwärmt. Es besteht wiederum die Möglichkeit, über eine Bypassleitung 43 das Arbeitsfluid des Gasturbinenprozesses um den vierten Wärmeübertrager herum zu leiten.

Durch die Wärmeübertrager 5 bis 8 steigen die Enthalpie und das thermodynamische Potenzial des Arbeitsmediums des Gasturbinenprozesses. Am Ende wird das Arbeitsmedium, hier Luft, über die Leitung 44 der Turbine 2 zugeführt, treibt diese an und expandiert.

Die Turbine 2 und der Verdichter 3 sind im einfachsten Fall über eine mechanische Wirkverbindung 10, z. B. eine Welle, miteinander gekoppelt. Die Turbine 2 ist ferner eingerichtet, über eine mechanische Wirkverbindung 9, z. B. eine Welle, ein Nebenaggregat, beispielsweise einen Generator 1, anzutreiben. Die Wirkverbindung kann, falls notwendig, noch über ein Getriebe umgelenkt oder geschaltet oder in der Drehzahl übersetzt sein kann. Da die Turbine 2, Verdichter 3 und der Generator 1 in Wirkverbindung miteinander stehen, ist es möglich, während der Anfahrphase des Gasturbinensystems den Verdichter 3 der Turbine 2 mit dem Generator G motorisch anzutreiben. Wenn das Gasturbinensystem nach der Anfahrtsphase der Brennkraftmaschine 4 und des erfolgten Aufheizens der Wärmetauscher 5 - 8 Energie liefert, arbeitet der Generator G generatorisch.

Die Regulierung des Gasturbinenprozesses ist von dem Betriebspunkt der Brennkraftmaschine abhängig. Qualitative und quantitative Regelung des Massenstroms von Arbeitsmedium mit Steuerungsventilen (SV) ermöglicht das Erreichen eines energetisch und exergetisch optimalen Wirkungsgrads.

Somit kann abhängig von dem Betriebspunkt der Brennkraftmaschine mit Hilfe der Steuerventile ein energetisch optimaler Wirkungsgrad des Gesamtsystems aus Brennkraftmaschine und Gasturbine erreicht werden.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Zusätzlich können viele Modifikationen ausgeführt werden, um die Antriebsvorrichtung an den spezifischen Einsatzzweck oder Fahrzeugtyp anzupassen. So ist die Erfindung hinsichtlich des konstruktiven Aufbaus des Wärmeübertragers nicht auf einen bestimmten Aufbau beschränkt. Beispielsweise können die Wärmeübertrager der Abwärmeströme als direkte oder als indirekte Wärmeübertrager ausgebildet sein. Direkte Wärmeübertrager ermöglichen direkte Wärmeübertragung des Abwärmestroms zum Arbeitsmedium, basierend auf drei Mechanismen der Wärmeübertragung: Wärmeleitung, Wärmekonvektion und Wärmestrahlung - ohne Phasenumwandlung. Im Rahmen der Erfindung besteht auch die Möglichkeit Wärmeübertrager mit Phasenumwandlung einzusetzen. Dadurch kann eine Verbesserung der Wärmeübertragung aufgrund der Erhöhung der Wärmestromdichte erreicht werden. Als Wärmeübertrager mit Phasenumwandlung können vorzugsweise Wärmeröhren eingesetzt werden.

Ferner besteht im Rahmen der Erfindung auch die Möglichkeit, dass die Gasturbine direkt mechanisch mit der Brennkraftmaschine gekoppelt wird und mit Hilfe einer Antriebswelle angetrieben wird. Ferner besteht die Möglichkeit, dass nur der Verdichter direkt mechanisch mit dem Generator gekoppelt wird. Als Arbeitsmedium des Gasturbinen-Kreisprozesses können anstatt Umgebungsluft auch andere reale Gase oder Edelgase verwendet werden.

Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Generator (G)
- 2: Turbine (T)
- 3: Verdichter (V)
- 4: Brennkraftmaschine
- 5: Wärmeübertrager
- 6: Wärmeübertrager und Kühler der Abgasrückgewinnung
- 7: Wärmeübertrager und Abgasnachbehandlung
- 8: Wärmeübertrager
- 9: mechanische Wirkverbindung
- 10: mechanische Wirkverbindung
- 11: Niedertemperaturkühler (NTK)
- 12: Hochtemperaturkühler (HTK)
- 13: Hauptwasserthermostat (TH)
- 14: Mischkammer (Abgas und Verbrennungsluft)
- 15: Klappe der Abgasrückführung (KL)
- 16: Kühler der Abgasrückführung
- 17, 18: Abgasturbolader (ATL 1, ATL2)
- 19: Hochdruck-Wärmeübertrager (HD-WÜ)
- 20: Niederdruck-Wärmeübertrager (ND-WÜ)
- 21: Kühlmittelpumpe
- 22: Steuerventil (SV)
- 23: Abgasnachbehandlung
- 30-45: Leitungen für Arbeitsfluid des Gasturbinenprozess
- 50-55: Ladeluftzuführung
- 60-66: Abgasstrang
- 70-79: Kühlkreislauf

## Patentansprüche

1. Antriebsvorrichtung eines Kraftfahrzeugs, insbesondere eines Nutzfahrzeugs, mit einer Brennkraftmaschine (4); und einem Gasturbinensystem zur Energierückgewinnung, umfassend einen Verdichter (3), mindestens einen Wärmeübertrager (5, 6, 7, 8) und eine Gasturbine (2), wobei das Gasturbinensystem ausgeführt ist, ein Arbeitsfluid des Gasturbinensystems im Verdichter zu verdichten, dem verdichteten Arbeitsfluid mittels des mindestens einen Wärmeübertragers Wärme mindestens eines Abwärmestroms der Brennkraftmaschine zuzuführen und die Gasturbine durch das erwärmte Arbeitsfluid anzutreiben, **gekennzeichnet durch** mindestens vier Wärmeübertrager (5, 6, 7, 8) des Gasturbinensystems, umfassend einen ersten Wärmeübertrager (5), der mit einem Abwärmestrom (75) der Motorkühlung (70) fluidverbunden ist, einen zweiten Wärmeübertrager (6), der mit einem Abwärmestrom (62) einer Abgasrückführung fluidverbunden ist, einen dritten Wärmeübertrager (7), der mit einem Abwärmestrom (65) einer Abgasnachbehandlung fluidverbunden ist, und einen vierten Wärmeübertrager (8), der mit einem Abwärmestrom (72) einer Kühlung des Ladeluftstrangs (50) fluidverbunden ist.

2. Antriebsvorrichtung nach Anspruch 1, **dadurch gekennzeichnet, dass** der erste Wärmeübertrager (5) im Abwärmestrom der Motorkühlung (70) stromauf eines Kühlers (16) der Abgasrückführung angeordnet ist.

3. Antriebsvorrichtung nach Anspruch 1 oder 2, **dadurch gekennzeichnet, dass** der zweite Wärmeübertrager (6) im Arbeitsfluidkreis (30) stromauf zu dem ersten Wärmeübertrager (5) angeordnet ist.

4. Antriebsvorrichtung nach einem der vorhergehenden Ansprüche, **dadurch gekennzeichnet,**
a) **dass** der zweite Wärmeübertrager (6) als Dreistrom-Wärmeübertrager ausgebildet ist, der mit einem Abwärmestrom (76) der Motorkühlung (70) fluidverbunden ist; oder
b) **dass** der zweite Wärmeübertrager als Zweistrom-Wärmeübertrager ausgebildet ist,

5. Antriebsvorrichtung nach einem der vorhergehenden Ansprüche, **dadurch gekennzeichnet, dass** der dritte Wärmeübertrager (7) in eine Abgasnachbehandlungseinrichtung (23) integriert ist.

6. Antriebsvorrichtung nach einem der vorhergehenden Ansprüche, **gekennzeichnet durch** einen ersten Abgasturbolader (17) und einen zweiten Abgasturbolader (18), mittels derer aus einer Umgebung angesaugte Ladeluft (51) in einer ersten und einer zweiten Stufe verdichtet werden; einen Hochdruck-Wärmeübertrager (19) und einen Niederdruck-Wärmeübertrager (20), mittels derer Ladeluft nach der ersten und der zweiten Verdichtung abgekühlt werden, wobei der vierte Wärmeübertrager (8) in einem Niedertemperaturkreislauf der Motorkühlung stromab des Hochdruck-Wärmeübertragers (19) und des Niederdruck-Wärmeübertragers (20) angeordnet ist.

7. Antriebsvorrichtung nach einem der vorhergehenden Ansprüche, wobei in Strömungsrichtung des Arbeitsfluids des Gasturbinensystems der zweite Wärmeübertrager (6) stromauf zum ersten (5), der erste (5) stromauf zum dritten (7), und der dritte (7) stromauf zum vierten (8) Wärmeübertrager angeordnet ist.

8. Antriebsvorrichtung nach einem der vorhergehenden Ansprüche, **dadurch gekennzeichnet,**
a) **dass** der Kreislauf (30) des Arbeitsfluids eine steuerbare Bypassleitung zur Umgehung des mindestens einen Wärmeübertragers umfasst; und/oder
b) **dass** der Kreislauf (30) des Arbeitsfluids für den ersten Wärmeübertrager, den zweiten Wärmeübertrager, den dritten Wärmeübertrager und den vierten Wärmeübertrager jeweils eine separate steuerbare Bypassleitung aufweist.

9. Antriebsvorrichtung nach einem der vorhergehenden Ansprüche, **dadurch gekennzeichnet, dass** der mindestens eine Wärmeübertrager (5, 6,7, 8) als direkter Wärmeübertrager oder indirekter Wärmeübertrager ausgeführt ist.

10. Fahrzeug, insbesondere Nutzfahrzeug, mit einer Antriebsvorrichtung nach einem der vorhergehenden Ansprüche.

11. Verfahren zum Betrieb einer Antriebsvorrichtung gemäß einer der vorhergehenden Ansprüche, mit den Schritten:
Erwärmen des Arbeitsfluids des Gasturbinensystems in dem mindestens einen Wärmeübertrager;
Zuführen des erwärmten Arbeitsfluids zu der Gasturbine; und
Erzeugung von mechanischer Energie durch Expansion des Arbeitsfluids in der Gasturbine.

## Claims

1. Drive device of a motor vehicle, in particular of a utility vehicle, having an internal combustion engine (4); and
having a gas turbine system for energy recovery, comprising a compressor (3), at least one heat exchanger (5, 6, 7, 8) and a gas turbine (2), wherein the gas turbine system is designed to compress a working fluid of the gas turbine system in the compressor, to supply heat of at least one waste-heat flow of the internal combustion engine to the compressed working fluid by way of the at least one heat exchanger, and to drive the gas turbine by way of the heated working fluid, **characterized by** at least four heat exchangers (5, 6, 7, 8) of the gas turbine system, comprising a first heat exchanger (5) which is fluidically connected to a waste-heat flow (75) of the engine cooling arrangement (70), a second heat exchanger (6) which is fluidically connected to a waste-heat flow (62) of an exhaust-gas recirculation arrangement, a third heat exchanger (7) which is fluidically connected to a waste-heat flow (65) of an exhaust-gas aftertreatment arrangement, and a fourth heat exchanger (8) which is fluidically connected to a waste-heat flow (72) of a cooling arrangement of the charge-air tract (50).

2. Drive device according to Claim 1, **characterized in that** the first heat exchanger (5) is arranged in the waste-heat flow of the engine cooling arrangement (70) upstream of a cooler (16) of the exhaust-gas recirculation arrangement.

3. Drive device according to Claim 1 or 2, **characterized in that** the second heat exchanger (6) is arranged in the working fluid circuit (30) upstream of the first heat exchanger (5).

4. Drive device according to one of the preceding claims, **characterized**
a) **in that** the second heat exchanger (6) is in the form of a three-flow heat exchanger which is fluidically connected to a waste-heat flow (76) of the engine cooling arrangement (70); or
b) **in that** the second heat exchanger is in the form of a two-flow heat exchanger.

5. Drive device according to one of the preceding claims, **characterized in that** the third heat exchanger (7) is integrated into an exhaust-gas aftertreatment unit (23).

6. Drive device according to one of the preceding claims, **characterized by** a first exhaust-gas turbocharger (17) and a second exhaust-gas turbocharger (18) by way of which charge air (51) drawn in from the surroundings is compressed in a first stage and in a second stage; a high-pressure heat exchanger (19) and a low-pressure heat exchanger (20) by way of which charge air is cooled downstream of the first and of the second compression stages, wherein the fourth heat exchanger (8) is arranged in a low-temperature circuit of the engine cooling arrangement downstream of the high-pressure heat exchanger (19) and of the low-pressure heat exchanger (20).

7. Drive device according to one of the preceding claims, wherein, in the flow direction of the working fluid of the gas turbine system, the second heat exchanger (6) is arranged upstream of the first heat exchanger (5), the first heat exchanger (5) is arranged upstream of the third heat exchanger (7), and the third heat exchanger (7) is arranged upstream of the fourth heat exchanger (8).

8. Drive device according to one of the preceding claims, **characterized**
a) **in that** the circuit (30) of the working fluid comprises a controllable bypass line for bypassing the at least one heat exchanger; and/or
b) **in that** the circuit (30) of the working fluid has in each case one separate controllable bypass line for the first heat exchanger, for the second heat exchanger, for the third heat exchanger and for the fourth heat exchanger.

9. Drive device according to one of the preceding claims, **characterized in that** the at least one heat exchanger (5, 6, 7, 8) is in the form of a direct heat exchanger or indirect heat exchanger.

10. Vehicle, in particular utility vehicle, having a drive device according to one of the preceding claims.

11. Method for operating a drive device according to one of the preceding claims, having the steps:
heating the working fluid of the gas turbine system in the at least one heat exchanger;
supplying the heated working fluid to the gas turbine; and
generating mechanical energy by expansion of the working fluid in the gas turbine.

## Revendications

1. Dispositif d'entraînement d'un véhicule automobile, en particulier d'un véhicule utilitaire, comprenant un moteur à combustion interne (4) ; et
un système de turbine à gaz pour la récupération d'énergie, comprenant un compresseur (3), au moins un échangeur de chaleur (5, 6, 7, 8) et une turbine à gaz (2), le système de turbine à gaz étant réalisé de manière à comprimer un fluide de travail du système de turbine à gaz dans le compresseur, à acheminer au fluide de travail comprimé au moyen de l'au moins un échangeur de chaleur de la chaleur au moins d'un flux de chaleur perdue du moteur à combustion interne et à entraîner la turbine à gaz par le fluide de travail chauffé, **caractérisé par** au moins quatre échangeurs de chaleur (5, 6, 7, 8) du système de turbine à gaz, comprenant un premier échangeur de chaleur (5) qui est en liaison fluidique avec un flux de chaleur perdue (75) du refroidissement du moteur (70), un deuxième échangeur de chaleur (6) qui est en liaison fluidique avec un flux de chaleur perdue (62) d'une recirculation de gaz d'échappement, un troisième échangeur de chaleur (7) qui est en liaison fluidique avec un flux de chaleur perdue (65) d'un post-traitement de gaz d'échappement et un quatrième échangeur de chaleur (8) qui est en liaison fluidique avec un flux de chaleur perdue (72) d'un refroidissement de la ligne d'air de suralimentation (50).

2. Dispositif d'entraînement selon la revendication 1, **caractérisé en ce que** le premier échangeur de chaleur (5) est disposé dans le flux de chaleur perdue de refroidissement du moteur (70) en amont d'un radiateur (16) de la recirculation des gaz d'échappement.

3. Dispositif d'entraînement selon la revendication 1 ou 2, **caractérisé en ce que** le deuxième échangeur de chaleur (6) est disposé dans le circuit de fluide de travail (30) en amont du premier échangeur de chaleur (5).

4. Dispositif d'entraînement selon l'une quelconque des revendications précédentes, **caractérisé en ce que**
a) le deuxième échangeur de chaleur (6) est réalisé sous forme d'échangeur de chaleur à triple flux qui est en liaison fluidique avec un flux de chaleur perdue (76) de refroidissement, du moteur (70) ; ou
b) le deuxième échangeur de chaleur est réalisé sous forme d'échangeur de chaleur à deux flux.

5. Dispositif d'entraînement selon l'une quelconque des revendications précédentes, **caractérisé en ce que** le troisième échangeur de chaleur (7) est intégré dans un dispositif de post-traitement des gaz d'échappement (23).

6. Dispositif d'entraînement selon l'une quelconque des revendications précédentes, **caractérisé par** un premier turbocompresseur à gaz d'échappement (17) et un deuxième turbocompresseur à gaz d'échappement (18), au moyen desquels de l'air de suralimentation (51) aspiré depuis l'environnement est comprimé dans un premier et un deuxième étage ; un échangeur de chaleur haute pression (19) et un échangeur de chaleur basse pression (20), au moyen desquels l'air de suralimentation est refroidi après la première et la deuxième compression, le quatrième échangeur de chaleur (8) étant disposé dans un circuit basse température de refroidissement du moteur en aval de l'échangeur de chaleur haute pression (19) et de l'échangeur de chaleur basse pression (20).

7. Dispositif d'entraînement selon l'une quelconque des revendications précédentes, dans lequel dans la direction d'écoulement du fluide de travail du système de turbine à gaz, le deuxième échangeur de chaleur (6) est disposé en amont du premier (5), le premier (5) est disposé en amont du troisième (7), et le troisième (7) est disposé en amont du quatrième (8) échangeur de chaleur.

8. Dispositif d'entraînement selon l'une quelconque des revendications précédentes, **caractérisé en ce que**
a) le circuit (30) du fluide de travail comprend une conduite de dérivation commandable pour contourner l'au moins un échangeur de chaleur ; et/ou
b) le circuit (30) du fluide de travail pour le premier échangeur de chaleur, le deuxième échangeur de chaleur, le troisième échangeur de chaleur et le quatrième échangeur de chaleur présente à chaque fois un conduit de dérivation commandable séparé.

9. Dispositif d'entraînement selon l'une quelconque des revendications précédentes, **caractérisé en ce que** l'au moins un échangeur de chaleur (5, 6, 7, 8) est réalisé sous forme d'échangeur de chaleur direct ou d'échangeur de chaleur indirect.

10. Véhicule, en particulier véhicule utilitaire comprenant un dispositif d'entraînement selon l'une quelconque des revendications précédentes.

11. Procédé pour faire fonctionner un dispositif d'entraînement selon l'une quelconque des revendications précédentes, comprenant les étapes suivantes :
chauffer le fluide de travail du système de turbine à gaz dans l'au moins un échangeur de chaleur ;
acheminer le fluide de travail chauffé jusqu'à la turbine à gaz ; et
générer de l'énergie mécanique par expansion du fluide de travail dans la turbine à gaz.
